# EUROPÄISCHE PATENTSCHRIFT

(11) **EP 1 432 757 B1**
(45) Veröffentlichungstag und Bekanntmachung des Hinweises auf die Patenterteilung: **19.01.2011**
(21) Anmeldenummer: 02779305.8
(22) Anmeldetag: 05.09.2002
(51) Int. Cl.: C08J 9/20, C08J 9/00, C08L 25/06

(54) **VERFAHREN ZUR HERSTELLUNG VON EXPANDIERBAREM POLYSTYROL**
METHOD FOR THE PRODUCTION OF EXPANDABLE POLYSTYRENE
PROCEDE DE PRODUCTION DE POLYSTYRENE EXPANSE

(30) Priorität: 19.09.2001 DE 10146078
(43) Veröffentlichungstag der Anmeldung: 30.06.2004
(73) Patentinhaber: BASF SE, 67056 Ludwigshafen (DE)
(72) Erfinder: DATKO, Achim, 69181 Leimen (DE); HAHN, Klaus, 67281 Kirchheim (DE); LARBIG, Harald, 67059 Ludwigshafen (DE); BATSCHEIDER, Karl-Heinz, 67112 Mutterstadt (DE)
(86) Internationale Anmeldenummer: PCT/EP2002/009924
(87) Internationale Veröffentlichungsnummer: WO 2003/025051

(56) Entgegenhaltungen:
- EP-A- 0 987 293

## Beschreibung

Die Erfindung betrifft ein Verfahren zur Herstellung von perlförmigem, expandierbarem Polystyrol durch Polymerisation von Styrol in wäßriger Suspension in Gegenwart von Treibmitteln und Expandierhilfsmitteln.

Schaumstoffe auf Basis von Styrolpolymerisaten sind seit langem bekannt und sind vielfach in der Literatur beschrieben. Besondere Bedeutung haben hierbei die sogenannten Polystyrolpartikelschäume, die durch Aufschäumung von Treibmittel enthaltenden Polystyrolpartikeln und anschließende Verschweißung dieser geschäumten Partikel zu Blöcken, Formteilen und anderen geschäumten Gegenständen hergestellt werden.

Die Herstellung der Treibmittel enthaltenden, expandierbaren Polystyrolpartikel erfolgt zumeist durch Suspensionspolymerisation. Dabei wird monomeres Styrol in einer wäßrigen Lösung suspendiert und polymerisiert. Das Treibmittel wird meist im Verlauf der Polymerisation zugegeben, es ist jedoch auch möglich, das Treibmittel in einem nachfolgenden Verfahrensschritt den Polystyrolpartikeln zuzusetzen. Bevorzugte Treibmittel sind C₄-C₆-Kohlenwasserstoffe, insbesondere Pentane. In technischen Prozessen werden diese in Mengen von 6 bis 7 Gew.-%, bezogen auf die Monomeren, eingesetzt. Aus Umweltschutzgründen wird angestrebt, die Pentanmenge zu verringern; dies ist aber nach US-A 5 112 875 nur möglich, wenn in Gegenwart von Kettenüberträgern, z.B. Mercaptanen gearbeitet wird, die das Molekulargewicht des gebildeten Polystyrols herabsetzen. Es hat sich nämlich gezeigt, daß beim Verschäumen von relativ hochmolekularem Polystyrol mit weniger Treibmittel die Expandierbarkeit des Polystyrols, d.h. der Expansionsgrad der Schaumpartikel zu gering wird. Andererseits neigen aber EPS-Partikel auf Basis von niedermolekularem Polystyrol beim Verschäumen zum Verkleben und Schrumpfen. Dies ist auch der Fall, wenn man nach EP-A 758 667 0,01 bis 1,0 Gew.-% eines gesättigten Kohlenwasserstoffs mit einem Siedepunkt oberhalb von 70°C als zusätzliches Expandierhilfsmittel zuletzt und in Gegenwart von 0,05 bis 0,5 Gew.-% dimeren α-Methylstyrol als Kettenüberträger arbeitet. Vom Zusatz größerer Mengen Expandierhilfsmittel wird in EP-A 758 667 abgeraten, da diese als Weichmacher ein unerwünschtes Schrumpfen der expandierten Partikel bewirken würden.

WO 00/15703 beschreibt ein Verfahren zur Herstellung von EPS-Perlen durch Suspensionspolymerisation von Styrol in Gegenwart von 0,5 bis 4 Gew.-% eines Kohlenwasserstoff-Treibmittels sowie gegebenenfalls von Weißöl und einem Kettenüberträger. Die EPS-Perlen werden in einer ersten Stufe auf Schüttdichten zwischen 0,2 und 0,6 g/m³ geschäumt, d.h. ihre Expandierbarkeit ist sehr gering.

Der Erfindung lag nun die Aufgabe zugrunde, ein Verfahren zur Herstellung von EPS-Partikeln mit relativ niedrigem Treibmittelgehalt und guter Expandierbarkeit zu entwickeln, die trotzdem zu Schaumpartikeln mit geringer Verklebung und geringem Schrumpf verarbeitet werden können.

Diese Aufgabe wird erfindungsgemäß dadurch gelöst, daß die Polymerisation in Gegenwart von
A. 1 bis 5 Gew.-% eines gesättigten aliphatischen Kohlenwasserstoffs mit 4 bis 6 C-Atomen und einem Siedepunkt unterhalb von 70°C als Treibmittel und
B. 0,5 bis 3,5 Gew.-% eines gesättigten aliphatischen Kohlenwasserstoffs mit einem Siedepunkt oberhalb von 70°C als Expandierhilfsmittel,
jedoch in Abwesenheit eines Kettenüberträgers, welches eine Reduktion des Molekulargewichts des Polystyrols bewirkt, durchgeführt wird.

Das erfindungsgemäße EPS enthält als Polymermatrix Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol.

Wie in EP-A 758 667 ausgeführt wird, kann handelsübliches Styrol Ethylbenzol und Cumol als Verunreinigungen enthalten. Da diese Substanzen nicht unbedenklich sind, sollte möglichst ein Styrol eingesetzt werden, das nicht mehr als 1000 ppm, vorzugsweise nicht mehr als 500 ppm Ethylbenzol und Cumol enthält.

Die Suspensionspolymerisation erfolgt in Gegenwart von Suspensionsstabilisatoren und üblicher styrollöslicher Polymerisationsinitiatoren. Als Suspensionsstabilisatoren werden hierbei üblicherweise neben Molekülkolloiden wie Polyvinylalkohol (PVA) und Polyvinylpyrrolidon (PVP) schwerlösliche Salze wie Mg₂P₂O₇ und Ca₃(PO₄)₂ (sogenannte Pickering-Salze) in Kombination mit einem Extender wie Dodecylbenzolsulfonat eingesetzt. Zur Steuerung der Perlgröße können zusätzlich geringe Mengen anorganischer Alkalisalze, z.B. Sulfate, Chloride, Carbonate oder Hydrogencarbonate zugesetzt werden. Bei der Polymerisation werden die übliche radikalischen Polymerisationsinitiatoren zugegeben, beispielsweise Dibenzoylperoxid, tert.-Butylperbenzoat, tert. Butylperoxy-2-ethylhexanoat oder Dicumylperoxid.

Erfindungsgemäß werden vor, während oder nach der Polymerisation folgende Hilfsstoffe zugesetzt:
A. 1 bis 5 Gew.-%, vorzugsweise 2 bis 4 Gew.-% eines C₄-C₆-Kohlenwasserstoffs mit einem Siedepunkt unterhalb von 70°C als Treibmittel. Geeignete Treibmittel sind z.B. Butan, Isobutan, n-Pentan, Isopentan, Neopentan, Cyclopentan und Hexan, sowie deren mischungen. Bevorzugt ist n-Pentan.
B. 0,5 bis 3,5 Gew.-%, vorzugsweise 1,1 bis 3,0 Gew.-%, und insbesondere 1,6 bis 3,0 Gew.-%, bezogen auf Styrol, eines gesättigtem Kohlenwasserstoffs mit einem Siedepunkt oberhalb von 70°C, vorzugsweise oberhalb von 150°C und insbesondere oberhalb von 200°C. Ist der Siedepunkt sehr niedrig, dann diffundiert das Expandierhilfsmittel zu schnell aus den expandierbaren Polystyrol-Perlen heraus und kann ebenfalls zu Umweltbelastung beitragen. Es hat sich gezeigt, daß - entgegen der Warnung in EP-A 758 667 - auch größere Mengen an Expandierhilfsmitteln nicht zum Schrumpfen der expandierten Partikeln führen, wenn erfindungsgemäß geringe Mengen an Treibmitteln verwendet werden. Besonders bevorzugte Expandierhilfsmittel sind leichte Mineralöle mit einem Siedebereich von 250°C bis 300°C und Weißöle mit einem Siedebereich von 430 bis 540°C.

Wesentlich ist, daß die Polymerisation in Abwesenheit eines Kettenüberträgers durchgeführt wird, welcher eine Reduktion des Molekulargewichts bewirkt. Unter Reduktion des Molekulargewichts ist dabei eine Abnahme der Viskositätszahl um mehr als 2, vorzugsweise um mehr als 1 ml/g zu verstehen.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat und Hexabromcyclododecan sowie Synergisten für Flammschutzmittel, wie Dicumyl; Mittel zur Herabsetzung der Wärmeleitfähigkeit der Schaumstoffe, wie Graphit, Ruß oder Aluminium; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Entsprechend werden die Zusatzstoffe im erfindungsgemäßen Verfahren zugegeben oder anschließend auf die expandierbaren Styrolpolymerisate aufgebracht.

Die im erfindungsgemäßen Verfahren erhaltenen perlförmigen, expandierbaren Styrolpolymerisate werden nach beendeter Polymerisation auf bekannte Weise von der wäßrigen Phase abgetrennt, gewaschen und getrocknet.

Die erhaltenen EPS-Perlen haben im allgemeinen einen Durchmesser zwischen 0,2 und 4 mm. Sie können nach üblichen Methoden, z.B. mit Wasserdampf, in einer Stufe zu Schaumstoffteilchen mit einem Durchmesser zwischen 0,1 und 2 cm und einer Schüttdichte unter und 0,1 g/cm³ vorgeschäumt werden, bei zweistufigem Schäumen werden Schüttdichten zwischen 0,005 und 0,05 g/cm³ erreicht.

Die vorgeschäumten Teilchen können dann nach üblichen Verfahren zu Schaumstoff-Formteilen mit einer Dichte von 0,005 bis 0,1 g/cm³ verschäumt werden.

Die nach dem erfindungsgemäßen Verfahrem hergestellten EPS-Perlen zeichnen sich durch eine gute Verarbeitungskonstanz aus, nämlich durch einen gleichmäßig hohen Expansionsgrad, durch eine gleichmäßig hohe Schäumgeschwindigkeit sowie gleichmäßig geringe Entformzeiten bei der Formteilherstellung. Außerdem ist die Tendenz zum Verkleben während des Vorschäumprozesses gering.

Vor allem aber enthalten die EPS-Perlen verhältnismäßig wenig problematische niedrigsiedende Kohlenwasserstoffe.

Die in den Beispielen genannten Prozente beziehen sich auf das Gewicht.

### Beispiel 1

In einen druckfesten 1m³-Rührkessel wurden 482 1 vollentsalztes Wasser und 45 kg einer frisch gefällten Suspension von Magnesiumpyrophosphat, hergestellt aus einer Lösung von 1,852 kg Magnesiumsulfat MgSO₄ in 9,0 1 demineralisiertem Wasser und einer Lösung von 0,988 kg Natriumpyrophosphat Na₄P₂O₇ in 33, 1 1 demineralisiertem Wasser, eingebracht.

Dazu wurde eine organische Phase mit 562 kg Styrol, in dem 5,62 kg Polystyrol gelöst waren, 11,24 kg Weißöl (2 %, bezogen auf Styrol) (Winog 70 der Fa. Wintershall), 0,562 kg Polyethylenwachs (Polywachs 2000 Micro der BASF), 2,25 kg Dicumylperoxid und 0,6 kg Dibenzoylperoxid (75 %ig) gegeben. Das Reaktionsgemisch wurde innerhalb von 1,5 Stunden auf 95°C erhitzt. Anschließend wurde innerhalb von 3,5 Stunden auf 137°C hochgeheizt, wobei nach 150 min 5,06 kg (1,3 %ig)Emulgator K 30 (Fa. Bayer) und nach 175 min über eine Dauer von 40 min 19,67 kg Pentan (3,5 %, bezogen auf Styrol) zugegeben wurden. Schließlich wurde 2,5 Stunden lang bei 137°C auspolymerisiert. Die erhaltenen Perlen wurden abzentrifugiert und getrocknet. Sie enthielten 2,9 % Pentan, 130 ppm Reststyrol und 500 ppm Ethylbenzol.

Die Viskositätszahl (gemessen nach DIN 51562, Teil 2) betrug 77 ml/g. Beim Vorschäumen mit Wasserdampf waren nur 7 % der Schaumperlen verklebt, was bei einem Technikumversuch noch tolerierbar ist.

### Beispiel 2 (Vergleich)

Beispiel 1 wurde wiederholt, wobei jedoch (in Anlehnung an das Beispiel 5 von EP-A 758 667) 0,25 % dimeres α-Methyl-Styrol und 0,315 % Weißöl zugesetzt wurden. Die erhaltenen EPS-Perlen hatten einen Pentangehalt von 3,0% und eine Viskositätszahl von 58 ml/g; beim Vorschäumen waren 21 % der Schaumperlen verklebt.

### Beispiel 3

Beispiel 1 wurde wiederholt, wobei jedoch nur 1% Weißöl zugesetzt wurde. Pentangehalt und Viskositätszahl waren gleich wie in Beispiel 1, die Verschweißung der Schaumperlen bei der Formteilherstellung war geringer als in Beispiel 1.

## Patentansprüche

1. Verfahren zur Herstellung von perlförmigen expandierbarem Polystyrol (EPS) durch Polymerisation von Styrol, gegebenenfalls zusammen mit bis zu 20 Gew.-% üblicher Comonomerer, in wässriger Suspension in Gegenwart von Suspensionsstabilisatoren und üblichem styrollöslichen Polymerisationsinitiatoren sowie von
A. 1 bis 5 Gew.-%, bezogen auf die Monomeren eines gesättigten, aliphatischen Kohlenwasserstoffs mit 4 bis 6 C-Atomen und einem Siedepunkt unterhalb von 70°C als Treibmittel und
B. 0,5 bis 3,5 Gew.-%, bezogen auf die Monomeren eines gesättigten aliphatischen Kohlenwasserstoffs mit einem Siedepunkt oberhalb von 70°C als Expandierhitfsmittel,
**dadurch gekennzeichnet, dass** die Polymerisation in Abwesenheit eines Kettenüberträgers, welcher eine Reduktion des Molekulargewichts des Polystyrols bewirkt, durchgeführt wird.

2. Verfahren zur Herstellung von EPS nach Anspruch 1, **dadurch gekennzeichnet, dass** die Polymerisation in Gegenwart von 2 bis 4 Gew.-% des Treibmittels A und von 1,1 bis 3,0 Gew.-% des Expandierhilfsmittels B durchgeführt wird.

3. Verfahren zur Herstellung von EPS nach Anspruch 1, **dadurch gekennzeichnet, dass** das Expandierhilfsmittel B ein leichtes Mineralöl mit einem Siedebereich von 250°C bis 300°C ist.

4. Verfahren zur Herstellung von EPS nach Anspruch 1, **dadurch gekennzeichnet, dass** das Expandierhilfsmittel ein Weißöl mit einem Siedebereich von 430°C bis 540°C ist.

## Claims

1. A process for the preparation of bead-form expandable polystyrene (EPS) by polymerization of styrene, optionally together with up to 20% by weight of customary comonomers, in aqueous suspension in the presence of suspension stabilizers and customary styrene-soluble polymerization initiators, and in the presence of
A. from 1 to 5% by weight, based on the monomers, of a saturated, aliphatic hydrocarbon having from 4 to 6 carbon atoms and having a boiling point below 70°C as blowing agent, and
B. from 0.5 to 3.5% by weight, based on the monomers, of a saturated, aliphatic hydrocarbon having a boiling point above 70°C as expansion assistant,
which comprises carrying out the polymerization in the absence of a chain-transfer agent which causes a reduction in the molecular weight of the polystyrene.

2. The process for the preparation of EPS according to claim 1, wherein the polymerization is carried out in the presence of from 2 to 4% by weight of the blowing agent A and in the presence of from 1.1 to 3.0% by weight of the expansion assistant B.

3. The process for the preparation of EPS according to claim 1, wherein the expansion assistant B is a light mineral oil having a boiling range of from 250°C to 300°C.

4. The process for the preparation of EPS according to claim 1, wherein the expansion assistant is a white oil having a boiling range of from 430°C to 540°C.

## Revendications

1. Procédé pour la préparation de polystyrène expansible (EPS) en forme de billes par polymérisation de styrène, le cas échéant avec jusqu'à 20% en poids de comonomères usuels, en suspension aqueuse en présence de stabilisateurs de suspension et d'initiateurs de polymérisation usuels, solubles dans le styrène, ainsi que de
A. 1 à 5% en poids, par rapport aux monomères, d'un hydrocarbure aliphatique saturé, comprenant 4 à 6 atomes de carbone et présentant un point d'ébullition inférieur à 70°C comme agent gonflant et
B. 0,5 à 3,5% en poids, par rapport aux monomères, d'un hydrocarbure aliphatique saturé, présentant un point d'ébullition supérieur à 70°C comme adjuvant d'expansion,
**caractérisé en ce que** la polymérisation est réalisée en l'absence d'un agent de transfert de chaîne, qui provoque une réduction du poids moléculaire du polystyrène.

2. Procédé pour la préparation d'EPS selon la revendication 1, **caractérisé en ce que** la polymérisation est réalisée en présence de 2 à 4% en poids de l'agent gonflant et de 1,1 à 3,0% en poids de l'adjuvant d'expansion B.

3. Procédé pour la préparation d'EPS selon la revendication 1, **caractérisé en ce que** l'adjuvant d'expansion B est une huile minérale légère présentant un point d'ébullition de 250°C à 300°C.

4. Procédé pour la préparation d'EPS selon la revendication 1, **caractérisé en ce que** l'adjuvant d'expansion est une huile blanche présentant un point d'ébullition de 430°C à 540°C.
